# EUROPÄISCHE PATENTSCHRIFT

(11) **EP 2 821 989 B1**
(45) Veröffentlichungstag und Bekanntmachung des Hinweises auf die Patenterteilung: **01.01.2020**
(21) Anmeldenummer: 14450035.2
(22) Anmeldetag: 17.06.2014
(51) Int. Cl.: B27J 1/00, G10D 9/02, G05B 19/4065, G10D 7/00

(54) **Vorrichtung zur Herstellung von Rohrblättern für Mundstücke von Holzblasinstrumenten**
Device for the production of reeds for mouthpieces of woodwind instruments
Dispositif de fabrication d'anches pour becs d'instruments à vent

(30) Priorität: 01.07.2013 AT 5452013
(43) Veröffentlichungstag der Anmeldung: 07.01.2015
(73) Patentinhaber: Kaiser, Paul, 1090 Wien (AT)
(72) Erfinder: Kaiser, Paul, 1090 Wien (AT)
(74) Vertreter: Keschmann, Marc

(56) Entgegenhaltungen:
- EP-B1- 1 564 717
- CA-A1- 2 261 473
- DE-A1- 2 440 824
- DE-U1-202004 002 270
- DE-U1-202009 007 130
- FR-A- 412 725
- FR-A- 616 025
- FR-A- 626 521
- FR-A1- 2 632 553
- FR-A1- 2 865 678
- US-A- 3 791 426

## Beschreibung

Die Erfindung betrifft eine Vorrichtung zur Herstellung von Rohrblättern für Mundstücke von Holzblasinstrumenten umfassend eine Rohrblatthalterung für das zu bearbeitende Rohrblatt, die um eine Schwenkachse schwenkbar gelagert ist, einen mittels eines Antriebs zu einer Hin- und Herbewegung antreibbaren Hobelschlitten mit einem Hobel- oder Schabwerkzeug zum Bearbeiten des Rohrblatts und eine mit dem Hobelschlitten verbundene Abtasteinrichtung zum Abtasten einer Schablone.

Die Erfindung betrifft weiters einen Nachrüstsatz für eine Vorrichtung der oben genannten Art.

Hobelmaschinen mit Schablonen zur Herstellung von Rohrblättern für Mundstücke von Holzblasinstrumenten sind in verschiedenen Ausführungen bekannt. Der höchste Grad an Reproduktionsgenauigkeit wird insbesondere durch einen mit einer manuellen Antriebseinheit verbundenen Hobelschlitten erreicht, wie dies in der Patentschrift EP 1564717 B1 beschrieben ist. Bei einem solchen Hobelschlitten ist eine stets gleiche Krafteinwirkung auf das Rohrmaterial sichergestellt, die durch das Eigengewicht des Schlittens und seiner Anbauten bedingt ist.

Für ein bestmögliches Ergebnis muss ein bestimmtes proportionales Verhältnis zwischen der Umdrehungszahl an der Antriebsachse des Hobelschlittens und der Schwenkgeschwindigkeit des Rohrblattes um seine Achse möglichst genau eingehalten werden. Hierbei kann etwa eine zu hohe Schwenkgeschwindigkeit zu unvollständigen Ergebnissen führen, wenn einzelne Segmente entlang der Drehachse des Rohrblattes übersprungen werden, zum Anderen kann eine überhöhte Umdrehungszahl an der Antriebsachse des Hobelschlittens zu ungewollten Vibrationen des Hobelschlittens und damit einhergehend zu einer Schartenbildung am Beginn der Hobelbahn führen.

Als nachteilig erweist sich daher die Schwierigkeit, die optimalen Geschwindigkeiten und deren Abstimmung zueinander gleichmäßig einzuhalten. Vor allem ungeübte Benutzer müssen daher eine deutlich geringere Arbeitsgeschwindigkeit wählen, um sicherzugehen, dass die erwähnten ungewünschten Nebeneffekte nicht auftreten.

Ebenfalls nachteilig ist die Notwendigkeit, unter bestimmten Umständen den Hobelvorgang unterbrechen zu müssen, um das vom Rohrblatt abgetragene Material vom Hobelschlitten zu entfernen. Dies ist insbesondere dann der Fall, wenn eine dickere Materialschicht, beispielsweise 0,1mm, in einem Arbeitsvorgang abgetragen werden soll, und/oder wenn das Rohrholz zuvor lange im Wasser aufgeweicht wurde, oder es sich um ein besonders weiches Ausgangsmaterial handelt.

Obwohl die in der EP 1564717 B1 beschriebene Hobelvorrichtung auch für Instrumentalklassen besonders geeignet ist, in denen sich mehrere Instrumentalisten eine Maschine teilen, ist es hierbei nachteilig, dass die Nutzungsfrequenz und damit verbunden der Abnutzungsgrad des Hobelmessers seit dem letzten Wechsel/Schärfen der Klinge nicht kontrolliert werden können.

Der Erfindung liegt demnach die Aufgabe zugrunde, die in der EP 1564717 B1 beschriebene Hobelvorrichtung dahingehend zu verbessern, dass die oben genannten Nachteile überwunden werden können.

Zur Lösung dieser Aufgabe ist eine Vorrichtung gemäß Anspruch 1 vorgesehen.

Dadurch wird erreicht, dass der Hobelvorgang selbsttätig, ohne Unterbrechung und mit den zuvor als optimal festgelegten Parametern betreffend die Umdrehungszahlen am Hobelschlitten und an der Achse der Rohrblatthalterung durchgeführt werden kann. Diese Parameter können erfindungsgemäß während des gesamten Hobelvorganges mit geringstmöglicher Abweichung beibehalten werden.

Die Erfindung schafft die Möglichkeit, die Schwenkbewegung der Rohrblatthalterung und die Hin- und Herbewegung des Hobelschlittens so miteinander zu synchronisieren, dass weder einzelne Segmente entlang der Drehachse des Rohrblattes wegen einer überhöhten Schwenkgeschwindigkeit übersprungen werden noch ungewollte Vibrationen des Hobelschlittens entstehen. Die Synchronisation kann entweder mechanisch oder elektrisch erfolgen. Im ersten Fall ist die Ausbildung bevorzugt so getroffen, dass der elektrische Antrieb der Rohrblatthalterung und der elektrische Antrieb des Hobelschlittens mechanisch miteinander synchronisiert sind. Hierfür ist ein einziger elektrischer Antrieb ausreichend, wobei die mechanische Synchronisierung beispielsweise über ein mechanisches Getriebe erfolgt.

Im Falle einer elektrischen Synchronisierung ist die Ausbildung so getroffen, dass der Rohrblatthalterung und dem Hobelschlitten jeweils ein eigener elektrischer Antrieb, insbesondere ein Elektromotor, zugeordnet ist, wobei die beiden elektrischen Antriebe mit einer gemeinsamen Steuervorrichtung verbunden sind. Die Steuervorrichtung kann insbesondere als Mikrocontroller ausgeführt sein und ist für die Einstellung der jeweils erforderlichen Drehzahl der beiden Elektromotoren verantwortlich. Insbesondere kann die Steuereinrichtung ausgebildet sein, um ein vorgegebenes Verhältnis der Drehzahl des einen Motors zur Drehzahl des anderen Motors einzustellen.

Besonders bevorzugt weist die Steuervorrichtung eine Drehzahlregelung für die elektrischen Antriebe auf, wobei die Drehzahlregelung bevorzugt eine Drehzahlmesseinrichtung umfasst. Dabei kann jedem Elektromotor eine eigene Drehzahlmesseinrichtung zugeordnet sein, welche die Drehzahl beispielsweise unmittelbar an der Welle des Motors oder an einem vom Motor angetriebenen Bauteil misst. Die Drehgeschwindigkeit kann bevorzugt mittels eines optisch, magnetisch oder induktiv arbeitenden Drehzahlaufnehmers erfolgen. Der Drehzahlaufnehmer übermittelt ein die gemessene Drehzahl repräsentierendes Signal an die Steuervorrichtung, in der das Signal als Ist-Wert dem Drehzahlregelkreis zugeführt wird.

Das Vorsehen einer zentralen Steuervorrichtung schafft die Möglichkeit, die erfindungsgemäße Hobelvorrichtung in verschiedenen Betriebsmodi laufen zu lassen. Die Ausbildung ist zu diesem Zweck bevorzugt derart getroffen, dass die Steuervorrichtung einen Programmspeicher umfasst, mit einem Speicherbereich für eine vorgegebene Motordrehzahl des Antriebs der Rohrblatthalterung, einem Speicherbereich für eine vorgegebene Motordrehzahl des Antriebs für den Hobelschlitten und ggf. einem Speicherbereich für eine vorgegebene Betriebszeit. Somit kann in dem Programmspeicher eine Mehrzahl unterschiedlicher Voreinstellungen für die Motordrehzahlen abgelegt werden, aus denen der Benutzer durch geeignete Benutzereingaben auswählen kann. So können beispielsweise Standardprogramme für die Funktionen "Vorhobeln", "Standard" oder "Ultrafein" vorgegeben werden. Die einzelnen Programme unterscheiden sich hierbei beispielsweise im Verhältnis der Motordrehzahl des dem Hobelschlitten zugeordneten Elektromotors zur Motordrehzahl des dem Rohrblatthalter zugeordneten Elektromotors. So kann vorgesehen sein, dass beim Programm "Ultrafein" die Schwenkgeschwindigkeit des Rohrblatthalters im Verhältnis zur Geschwindigkeit der Hobelschlittenbewegung geringer ist als beim Programm "Standard". Weiters kann auch die vorgegebene zeitliche Dauer des Hobelbetriebs variieren. Die Steuervorrichtung ist zu diesem Zweck bevorzugt derart weitergebildet, dass die Elektromotoren ausgeschaltet werden, sobald die im Programmspeicher gespeicherte oder ausgewählte Betriebszeit verstrichen ist. Dadurch ist ein vollautomatischer Betrieb sichergestellt. Der Programmspeicher kann in vorteilhafter Weise als Festspeicher (z.B. Flash-Speicher) ausgeführt sein.

Die Steuervorrichtung kann mit einer Programmierschnittstelle versehen sein, um z.B. über Standardschnittstellen wie USB eine nachträgliche Anpassung des Programmes von extern zu ermöglichen. Eine Anpassung des Programms kann im Rahmen eines allgemeinen Updates oder auch im Hinblick auf den Wechsel des Hobel-Modells erforderlich sein. Letzteres ist insbesondere dann von Vorteil, wenn die Erfindung als Nachrüstsatz für manuelle Hobelvorrichtungen ausgebildet ist.

Eine weitere bevorzugte Weiterbildung sieht vor, dass die Steuervorrichtung eine Zähleinheit zum Erfassen der Betriebszeit umfasst, wobei der Zähleinheit bevorzugt ein Grenzwertspeicher zugeordnet ist und die Zähleinheit bei Überschreiten eines Grenzwerts mit einer Signaleinrichtung zusammenwirkt, um ein Hobel- oder Schabwerkzeugwechselsignal zu erzeugen.

Die Vorrichtung umfasst bevorzugt eine elektronische Anzeigeeinheit, wie z.B. ein LCD-Display. Die Anzeigeeinheit ist mit der Steuervorrichtung verbunden, um Statusinformationen anzuzeigen. Beispielsweise kann der aktuelle Wert der Zähleinheit angezeigt werden. Außerdem kann die Anzeigeeinheit zur Darstellung eines Auswahl-Menüs zur Erfassung verschiedener Benutzereinstellungen dienen. Beispielsweise kann der jeweils eingestellte Soll-Wert der Drehzahl der Elektromotoren dargestellt und ein Menü zur Änderung der jeweils eingestellten Werte bereitgestellt werden. Dadurch gelingt eine Fein-Einstellung der optimalen Parameter. Weiters kann über die Anzeigeeinheit ein Menü zur Auswahl eines der im Programmspeicher hinterlegten Standardprogramme zur Verfügung gestellt werden. Um Benutzereingaben zu ermöglichen, ist der Anzeigeeinheit bevorzugt eine Eingabeeinheit, wie z.B. Tasten oder dgl. zugeordnet, die ebenfalls mit der Steuervorrichtung verbunden ist. Alternativ kann die Anzeigeeinheit berührungssensitive Bereiche aufweisen.

Weitere Benutzereingaben sind für das Zurücksetzen des Benutzungszählers nach einem Hobelmessertausch oder für das Festlegen der maximalen Messer-Benutzungsdauer bis zur Warnung denkbar.

Ein Speicher (z.B. EEPROM od. Flash) ermöglicht bevorzugt die Aufzeichnung dieser Benutzereinstellungen, sowie das Festhalten des Messer-Benutzungszählers.

Wie an sich bekannt, umfasst der Antrieb des Hobelschlittens bevorzugt einen Exzenterantrieb zum Umsetzen der Drehbewegung des Elektromotors in eine Hin- und Herbewegung des Hobelschlittens.

Die Schwenkbewegung der Rohrblatthalterung ist bevorzugt durch mechanische Anschläge begrenzt, wobei Mittel zum Detektieren einer Endposition der Schwenkbewegung vorgesehen sind, die mit der Steuervorrichtung zur Drehrichtungsumkehr des elektrischen Antriebs zusammenwirken. Dies ermöglicht in einfacher Weise die Erzeugung einer hin- und hergehenden Schwenkbewegung des Rohrblatthalters.

Das Detektieren der Endpositionen kann auf verschiedenste Art und Weise erfolgen. Beispielsweise kann das Signal der Drehzahlaufnehmer herangezogen werden. Alternativ kann die Ermittlung der Drehzahl auch in der Steuervorrichtung erfolgen, beispielsweise durch Auswertung einer elektrischen Kenngröße des jeweiligen Elektromotors. Bevorzugt ist in diesem Zusammenhang vorgesehen, dass die Detektionsmittel eine Messeinrichtung zum Erfassen der Stromaufnahme des elektrischen Antriebs umfassen.

Beginnt der Hobelvorgang immer auf derselben Seite des Rohrblattes entlang der Schwenkachse, kann es zu einer einseitigen Abnutzung des Hobelmessers kommen, da das Messer beim ersten Durchgang am stärksten beansprucht wird. Um diesem ungewünschten Effekt vorzubeugen kann die Steuervorrichtung für eine gleichmäßige Abnutzung sorgen. Dies kann beispielsweise durch wechselseitiges Beginnen des Hobelvorganges auf der jeweils gegenüberliegenden Seite geschehen, wobei die zuletzt benutzte Startposition im Speicher aufgezeichnet wird, oder alternativ durch Verwendung eines Zufallsgenerators.

Um die anfallenden Holzspäne zu entfernen, sieht eine bevorzugte Weiterbildung vor, dass ein Druckbehälter oder eine Druckerzeugungsvorrichtung für gasförmiges Medium vorgesehen ist, der bzw. die mit einer im Bereich der Rohrblatthalterung angeordneten Auslassdüse verbunden ist, wobei ein mit der Steuervorrichtung verbundener Schalter oder ein Schaltventil zum Steuern des Ausstoßes des gasförmigen. Mediums vorgesehen ist. Die Steuervorrichtung kann hierbei vorgegebene Reinigungsintervalle gespeichert haben, sodass das Ausstoßen von Druckmedium regelmäßig und automatisch erfolgt, ohne dass es einer Benutzeraktion bedarf. Insgesamt wird durch die Erfindung somit ein Automatisierungsgrad erreicht, bei dem sich eine Überwachung der Vorrichtung durch einen Benutzer erübrigt. Als Druckmedium ist Luft bevorzugt. Die Druckluft wird bevorzugt in einem Druckbehälter vorgehalten und bei Bedarf ausgestoßen. Alternativ kann Umgebungsluft in einer Druckerzeugungsvorrichtung erst bei Bedarf zu Druckluft verarbeitet werden. Dies würde jedoch den Aufwand und die Baugröße der Hobelvorrichtung erhöhen.

Gemäß einem anderen Aspekt der Erfindung wird ein Nachrüstsatz gemäß Anspruch 9 vorgeschlagen. Das Erweiterungsmodul bzw. der Nachrüstsatz ist vorteilhaft so gestaltet, dass ein einfacher Umbau einer bereits vorhandenen manuellen Hobelmaschine mit wenigen Handgriffen und ohne Spezialwerkzeug auch für ungeübte Anwender möglich ist. Beim Nachrüsten einer manuellen Hobelvorrichtung sind lediglich zwei Koppelstellen zu berücksichtigen, nämlich die Ankoppelung eines elektrischen Antriebs an den manuellen Antrieb des Hobelschlittens und die Ankoppelung eines elektrischen Antriebs an die Schwenkachse des Rohrblatthalters. Die elektrischen Antriebe können hierbei auch unter Zwischenschaltung eines' Getriebes angekoppelt werden, um die von dem elektrischen Antrieb zur Verfügung gestellte Drehzahl an die jeweils benötigte Drehzahl anpassen zu können.

Bevorzugte Weiterbildungen des Nachrüstsatzes ergeben sich aus den Unteransprüchen.

Die Erfindung wird nachfolgend anhand eines in der Zeichnung schematisch dargestellten Ausführungsbeispiels näher erläutert. In dieser zeigen Fig. 1 eine schematische Darstellung einer Hobelvorrichtung nach dem Stand der Technik, Fig. 2 ein Schaltbild der erfindungsgemäßen Einrichtung und Fig. 3 ein Ablaufdiagramm des Programmablaufs.

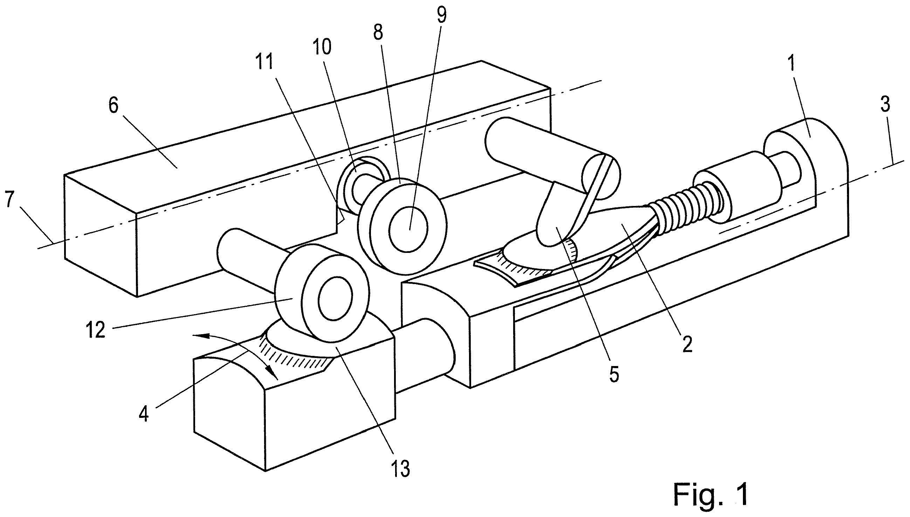

In Fig. 1 ist eine Rohrblatthalterung mit 1 bezeichnet, auf welcher ein Rohrblatt 2 befestigt ist. Die Rohrblatthalterung 1 ist entsprechend dem Doppelpfeil 4 um die Achse 3 schwenkbar gelagert. Die Rohrblatthalterung ist hierbei zwischen nicht näher dargestellten Anschlägen hin- und herschwenkbar gelagert, sodass das Hobel- bzw. Schabmesser 5 die gesamte Oberfläche des gekrümmten Rohrblatts 2 überstreichen kann. Das Hobel- bzw. Schabmesser 5 ist auf einem Hobelschlitten 6 starr befestigt, der mittels einer nicht näher dargestellten Lagerung so gehalten wird, dass er in Längsrichtung der Achse 7 hin- und herbewegt und um die Achse 7 verschwenkt werden kann. Die freie Verschwenkbarkeit des Hobelschlittens 6 um die Achse 7 erlaubt einerseits das Hobeln eines Höhenprofils des Rohrblatts 2 und andererseits das Anheben des Hobelschlittens 6 für die Rückholbewegung. Der Antrieb des Hobelschlittens 6 erfolgt durch einen schematisch angedeuteten Exzenter 8, der zu Rotation um die Drehachse 9 angetrieben ist und dessen Exzenterstift 10 in eine Nut 11 am Hobelschlitten 6 eingreift. Der Exzenterstift 10 ist in der Nut 11 in Höhenrichtung mit Spiel, quer dazu jedoch im Wesentlichen ohne Spiel aufgenommen, wobei die Tiefe der Nut 11 so gewählt ist, dass sich im Zuge einer Umdrehung des Exzenters 8 folgende Bewegung des Hobelschlittens 6 ergibt. Zuerst liegt der Hobelschlitten 6 mit seinem Eigengewicht mit dem Messer 5 auf dem Rohrblatt 2 auf und das Messer wird in diesem Zustand über die gesamte Länge des zu bearbeitenden Bereichs des Rohrblatts 2 gezogen. Am Ende dieser Translationsbewegung des Hobelschlittens 6 wird der Schlitten durch Verschwenken um die Achse 7 angehoben und das Messer wird im angehobenen Zustand an seine Anfangsposition gebracht. In der Anfangsposition wird das Messer 5 wieder auf das Rohrblatt 2 aufgesetzt und der Vorgang beginnt von vorne. Das Rohrblatt 2 wird somit immer in lediglich einer Bewegungsrichtung mit dem Messer 5 entlang einer sich in Längsrichtung erstreckenden Bahn bearbeitet. Durch Verdrehen der Rohrblatthalterung 1 zwischen jedem Hobelvorgang kann das Rohrblatt 2 entlang mehrerer paralleler Bahnen bearbeitet werden.

An dem Hobelschlitten 6 ist eine Abtastrolle 12 befestigt, die während des Hobelvorgangs auf der Oberfläche einer an der Rohrblatthalterung 1 befestigten Schablone 13 abrollt. Auf diese Art und Weise wird das Höhenprofil der Schablone 13 auf das Rohrblatt 2 übertragen. Die Abtastrolle 12 kann mittels eines nicht näher dargestellten Mechanismus höhenverstellbar am Hobelschlitten befestigt sein, um auf diese Weise die Schichtdicke des bei jedem Hobelvorgang abgetragenen Materials einzustellen.

Erfindungsgemäß werden die Schwenkbewegung der Rohrblatthalterung 1 und die Hin- und Herbewegung des Hobelschlittens 6 nun elektrisch angetrieben. Zu diesem Zweck wird der Exzenter 8 mit Hilfe eines Elektromotors angetrieben. Weiters ist an die Rohrblatthalterung 1 ein Elektromotor gekoppelt, der die Rohrblatthalterung 1 zu Schwenkbewegungen um die Achse 3 antreibt und bei Erreichen des Anschlags jeweils seine Drehrichtung umkehrt.

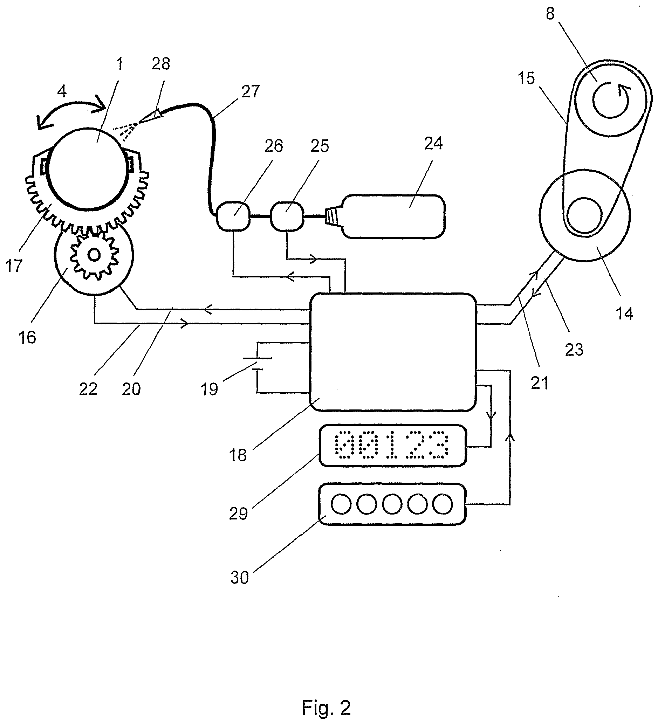

Der elektrische Antrieb samt Steuerung ist in Fig. 2 schematisch dargestellt. Es ist ein Elektromotor 14 ersichtlich, der über einen Riemen 15 den Exzenter 8 antreibt. Weiters ist ein Elektromotor 16 ersichtlich, der über eine Zahnradübersetzung ein Ritzel 17 antreibt, das an der Rohrblatthalterung 1 befestigt ist. Die Elektromotoren 14 und 16 sind mit einer Steuervorrichtung 18, wie z.B. einem Mikrocontroller, verbunden, mit welcher die Drehzahl beider Motoren geregelt wird. Die Stromversorgung der Steuervorrichtung ist mit 19 bezeichnet. Die Elektromotoren 14,16 werden über die Leitungen 20 bzw. 21 mit Motorstrom versorgt. Die Elektromotoren 14, 16 verfügen jeweils über einen Drehzahlsensor, dessen Signal über eine Leitung 22 bzw. 23 der Steuervorrichtung 18 zugeführt ist. Das die Drehzahl repräsentierende Signal wird einer in der Steuervorrichtung 18 ausgebildeten Drehzahlregelung als Ist-Wert zugeführt, worauf der Motorstrom ggf. angepasst wird, um die jeweils gewünschte Drehzahl möglichst konstant zu halten.

Ein Druckluftbehälter ist mit 24 bezeichnet, der über einen Druckluftsensor 25, ein Magnetventil 26 und eine Druckluftleitung 27 mit einer Druckluftdüse 28 verbunden ist. Die Druckluftdüse 28 führt den Druckluftstrahl nahe an die Position des Hobelmessers 5 heran. Die Steuervorrichtung 18 ist so programmiert, dass sie das Magnetventil 26 in regelmäßigen Zeitabständen für kurze Zeit, z.B. 0,5 sek. ansteuert, um dieses zu öffnen. Die Steuervorrichtung 18 kann auch so programmiert sein, dass sich das Magnetventil 26 durch einen Tastendruck vom Benutzer jederzeit zusätzlich zu den im Programm vorgegebenen Zeitpunkten betätigen lässt. Der Druckluftsensor versorgt die Steuervorrichtung 18 mit einem Druckluftsignal, sodass die Steuervorrichtung 18 bei Unterschreiten eines vorgegebenen unteren Grenzwerts des Drucks ein Signal abgeben kann, welches dem Benutzer anzeigt, dass der Druckluftbehälter 24 ausgetauscht oder neu beladen werden muss. Alternativ oder zusätzlich wird die Inbetriebnahme der Elektromotoren verhindert, wenn der Druck im Druckluftbehälter 24 nicht ausreichend ist. Der Druckluftbehälter 24 ist beispielsweise als austauschbare Druckluftkartusche ausgebildet, die zum Zwecke des einfachen Wechsels ein Schraubventil aufweist.

Zur Anzeige von Informationen wirkt die Steuervorrichtung 18 mit einer Anzeigevorrichtung 29 zusammen. Ein Bedienelement ist mit 30 bezeichnet.

Bevorzugt sind alle in Fig. 2 dargestellten Bauteile mit Ausnahme der mechanischen Ankoppelung der Elektromotoren 14, 16 an den Exzenter 8 und an die Rohrblatthalterung 1, der Druckluftdüse 28, dem Bedienelement 30 und der Anzeigevorrichtung 29 in einem Gehäuse untergebracht, an dessen Oberseite die jeweilige Hobelmaschine montiert werden kann.

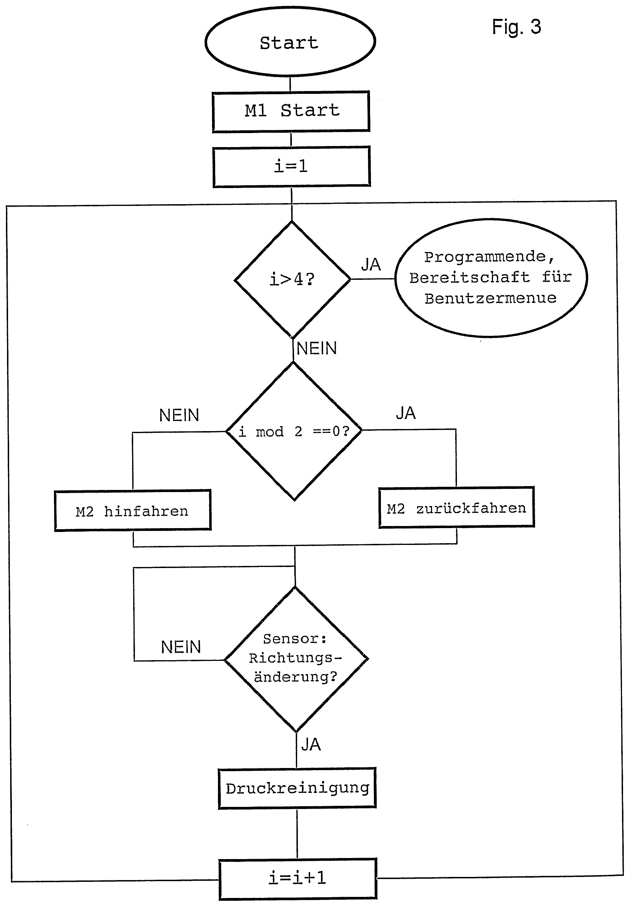

Die Funktionsweise der Steuervorrichtung 18 wird nun anhand des Diagramms gemäß Fig. 3 näher erläutert. Zunächst wird der Programmablauf gestartet. Danach wird die Position der Rohrblatthalterung 1 geprüft und ggf. mit Hilfe des Elektromotors 16 in die Ausgangsposition, d.h. in eine der beiden Endstellungen gebracht. Danach wird der Elektromotor 14 (M1) gestartet, um die Bewegung des Hobelschlittens 8 in Gang zu setzen. Der Zähler i für die Anzahl der Schenkbewegungen der Rohrblatthalterung 1 wird auf eins gesetzt. Im vorliegenden Beispiel sollen vier Durchgänge der Schwenkbewegungen durchgeführt werden, d.h. die Rohrblatthalterung 1 wird einmal hin-, einmal her-, noch einmal hin- und noch einmal hergeschwenkt. Es wird daher zunächst geprüft, ob der Zähler i den Wert vier überschreitet. Wenn dies der Fall ist, wird das Programm beendet. Andernfalls wird überprüft, ob der Zähler i einen geraden oder einen ungeraden Wert aufweist. In Abhängigkeit vom Ergebnis dieser Überprüfung wird der Elektromotor 16 (M2) entweder in die eine oder in die andere Richtung gedreht, bis ein Drehrichtungssensor (der z.B. die Stromaufnahme des Elektromotors 16 misst) das Erreichen eines Schwenkanschlags detektiert. Bei Erreichen des Anschlags wird die Druckluftreinigung in Gang gesetzt. Weiters wird der Wert des Zählers i um eins erhöht und der Programmablauf kehrt an den Punkt zurück, an dem geprüft wird, ob der Zähler i den Wert 4 überschreitet. Beim nächsten Durchlauf des Programms wird der Elektromotor 16 (M2) zu Rotation in die andere Richtung angesteuert. Nach vier Durchgängen wird das Programm beendet.

## Patentansprüche

1. Vorrichtung zur Herstellung von Rohrblättern für Mundstücke von Holzblasinstrumenten umfassend eine Rohrblatthalterung (1) für das zu bearbeitende Rohrblatt (2), die um eine Schwenkachse (3) schwenkbar gelagert ist, einen mittels eines Antriebs zu einer Hin- und Herbewegung antreibbaren Hobelschlitten (6) mit einem Hobel- oder Schabwerkzeug (5) zum Bearbeiten des Rohrblatts (2) und eine mit dem Hobelschlitten (6) verbundene Abtasteinrichtung (12) zum Abtasten einer Schablone (13), wobei der Antrieb des Hobelschlittens derart ausgebildet ist, dass er den Hobelschlitten (6) für die Rückholbewegung anhebt, **dadurch gekennzeichnet, dass** die Schwenkbewegung der Rohrblatthalterung (1) und die Hin- und Herbewegung des Hobelschlittens (6) elektrisch angetrieben sind, und dass Mittel vorgesehen sind, die dazu vorgesehen sind, die Schwenkbewegung der Rohrblatthalterung (1) und die Hin- und Herbewegung des Hobelschlittens (6) mechanisch oder elektrisch miteinander zu synchronisieren, sodass das Rohrblatt (2) entlang mehrerer paralleler Bahnen bearbeitet wird, wobei im Falle der elektrischen Synchronisation der Rohrblatthalterung (1) und dem Hobelschlitten (6) jeweils ein eigener elektrischer Antrieb, insbesondere ein Elektromotor (14), zugeordnet ist, wobei die beiden elektrischen Antriebe mit einer gemeinsamen Steuervorrichtung (18) verbunden sind.

2. Vorrichtung nach Anspruch 1, **dadurch gekennzeichnet, dass** die Steuervorrichtung (18) eine Drehzahlregelung für die elektrischen Antriebe aufweist, wobei die Drehzahlregelung bevorzugt eine Drehzahlmesseinrichtung umfasst.

3. Vorrichtung nach Anspruch 1 oder 2, **dadurch gekennzeichnet, dass** die Steuervorrichtung (18) einen Programmspeicher umfasst, mit einem Speicherbereich für eine vorgegebene Motordrehzahl des Antriebs der Rohrblatthalterung (1), einem Speicherbereich für eine vorgegebene Motordrehzahl des Antriebs für den Hobelschlitten (6) und ggf. einem Speicherbereich für eine vorgegebene Betriebszeit,

4. Vorrichtung nach Anspruch 1, 2 oder 3, **dadurch gekennzeichnet, dass** die Steuervorrichtung (18) eine Zähleinheit zum Erfassen der Betriebszeit umfasst, wobei der Zähleinheit bevorzugt ein Grenzwertspeicher zugeordnet ist und die Zähleinheit bei Überschreiten eines Grenzwerts mit einer Signaleinrichtung zusammenwirkt, um ein Hobel- oder Schabwerkzeugwechselsignal zu erzeugen.

5. Vorrichtung nach einem der Ansprüche 1 bis 4, **dadurch gekennzeichnet, dass** der Antrieb des Hobelschlittens (6) einen Exzenterantrieb (8) zum Umsetzen der Drehbewegung des Elektromotors (14) in eine Hin- und Herbewegung des Hobelschlittens (6) umfasst.

6. Vorrichtung nach einem der Ansprüche 1 bis 5, **dadurch gekennzeichnet, dass** die Schwenkbewegung der Rohrblatthalterung (1) durch mechanische Anschläge begrenzt ist und Mittel zum Detektieren einer Endposition der Schwenkbewegung vorgesehen sind, die mit der Steuervorrichtung (18) zur Drehrichtungsumkehr des elektrischen Antriebs zusammenwirken.

7. Vorrichtung nach Anspruch 6, **dadurch gekennzeichnet, dass** die Detektionsmittel eine Messeinrichtung zum Erfassen der Stromaufnahme des elektrischen Antriebs umfassen.

8. Vorrichtung nach einem der Ansprüche 1 bis 7, **dadurch gekennzeichnet, dass** ein Druckbehälter (24) oder eine Druckerzeugungsvorrichtung für gasförmiges Medium vorgesehen ist, der bzw. die mit einer im Bereich der Rohrblatthalterung (1) angeordneten Auslassdüse (28) verbunden ist, wobei ein mit der Steuervorrichtung (18) verbundener Schalter oder ein Schaltventil (26) zum Steuern des Ausstoßes des gasförmigen Mediums vorgesehen ist.

9. Nachrüstsatz für eine Vorrichtung nach dem Oberbegriff des Anspruchs 1, umfassend einen elektrischen Antrieb für die Schwenkbewegung der Rohrblatthalterung (1), einen elektrischen Antrieb für die Hin- und Herbewegung des Hobelschlittens (6) und Mittel, die dazu vorgesehen sind, die Schwenkbewegung der Rohrblatthalterung (1) und die Hin- und Herbewegung des Hobelschlittens (6) mechanisch oder elektrisch miteinander zu synchronisieren, sodass das Rohrblatt (2) entlang mehrerer paralleler Bahnen bearbeitet wird, wobei der Nachrüstsatz im Falle der elektrischen Synchronisation weiters eine Steuervorrichtung (18), insbesondere einen Mikrocontroller umfasst, die bzw. der mit den elektrischen Antrieben, insbesondere Elektromotoren (16) verbindbar ist, wobei der Rohrblatthalterung (1) und dem Hobelschlitten (6) jeweils ein eigener elektrischer Antrieb, insbesondere ein Elektromotor (16), zuordenbar ist.

10. Nachrüstsatz nach Anspruch 9, **dadurch gekennzeichnet, dass** die Steuervorrichtung (18) eine Drehzahlregelung für die elektrischen Antriebe aufweist, wobei die Drehzahlregelung bevorzugt eine Drehzahlmesseinrichtung umfasst.

11. Nachrüstsatz nach Anspruch 9 oder 10, **dadurch gekennzeichnet, dass** die Steuervorrichtung (18) einen Programmspeicher umfasst, mit einen Speicherbereich für eine vorgegebene Motordrehzahl des Antriebs der Rohrblatthalterung (1), einem Speicherbereich für eine vorgegebene Motordrehzahl des Antriebs für den Hobelschlitten (6) und einem Speicherbereich für eine vorgegebene Betriebszeit.

12. Nachrüstsatz nach Anspruch 9, 10 oder 11, **dadurch gekennzeichnet, dass** die Steuervorrichtung (18) eine Zähleinheit zum Erfassen der Betriebszeit umfasst, wobei der Zähleinheit bevorzugt ein Grenzwertspeicher zugeordnet ist und die Zähleinheit bei überschreiten eines Grenzwerts mit einer Signaleinrichtung zusammenwirkt, um ein Hobel- oder Schabwerkzeugwechselsignal zu erzeugen.

13. Nachrüstsatz nach einem der Ansprüche 9 bis 12, **dadurch gekennzeichnet, dass** ein Druckbehälter (24) oder eine Druckerzeugungsvorrichtung für gasförmiges Medium vorgesehen ist, der bzw. die mit einer im Bereich der Rohrblatthalterung (1) anordenbaren Auslassdüse (28) verbindbar ist, wobei ein mit der Steuervorrichtung (18) verbindbarer Schalter oder ein Schaltventil (26) zum Steuern des Ausstoßes des gasförmigen Mediums vorgesehen ist.

## Claims

1. A device for the production of reeds for mouthpieces of woodwind instruments, comprising a reed holder (1) for the reed (2) to be worked on, which is mounted so as to be pivotable about a pivot axis (3), a planer carriage (6) drivable to an oscillating motion by a drive and including a planer or scraper tool (5) for working on the reed (2), and a scanning device (12) connected to the planer carriage (6) for scanning a template (13), wherein the drive of the planer carriage is designed to lift the planer carriage (6) for the return motion, **characterized in that** the pivotal motion of the reed holder (1) and the oscillating motion of the planer carriage (6) are electrically driven, and that means are provided for mechanically or electrically synchronizing the pivotal motion of the reed holder (1) and the oscillating motion of the planer carriage (6) in such a manner that the reed (2) is worked on along several parallel paths, wherein, in the case of electric synchronization, a separate electric drive, in particular an electric motor (14), is each assigned to the reed holder (1) and the planer carriage (6), the two electric drives being connected to a common control device (18).

2. A device according to claim 1, **characterized in that** the control device (18) comprises a speed control for the electric drives, said speed control preferably comprising a speed measuring device.

3. A device according to claim 1 or 2, **characterized in that** the control device (18) comprises a program memory including a memory area for a pregiven motor speed of the drive of the reed holder (1), a memory area for a pregiven motor speed of the drive for the planer carriage (6) and, optionally, a memory area for a pregiven operating time.

4. A device according to claim 1, 2 or 3, **characterized in that** the control device (18) comprises a counting unit for determining the operating time, wherein a limit value memory is preferably assigned to the counting unit and the counting unit, when exceeding a limit value, cooperates with a signalling device to generate a planer or scraper tool exchange signal.

5. A device according to any one of claims 1 to 4, **characterized in that** the drive of the planer carriage (6) comprises an eccentric drive (8) for converting the rotary motion of the electric motor (14) into an oscillating motion of the planer carriage (6).

6. A device according to any one of claims 1 to 5, **characterized in that** the pivotal motion of the reed holder (1) is limited by mechanical stops, and means for detecting an end position of the pivotal motion are provided, which cooperate with the control device (18) for reversing the direction of rotation of the electric drive.

7. A device according to claim 6, **characterized in that** the detection means comprise a measuring device for detecting the power consumption of the electric drive.

8. A device according to any one of claims 1 to 7, **characterized in that** a pressure vessel (24) or a pressure generating device for a gaseous medium is provided, which is connected to an outlet nozzle (28) disposed in the region of the reed holder (1), wherein a switch connected to the control device (18) or a switch valve (26) for controlling the ejection of the gaseous medium is provided.

9. A retrofit kit for a device according to the preamble of claim 1, comprising an electric drive for the pivotal motion of the reed holder (1), an electric drive for the oscillating motion of the planer carriage (6), and means provided for mechanically or electrically synchronizing the pivotal motion of the reed holder (1) and the oscillating motion of the planer carriage (6) such that the reed (2) is worked on along several parallel paths, wherein the retrofit kit, in the case of electric synchronization, further comprises a control device (18), in particular a microcontroller, which is connectable to the electric drives, in particular electric motors (16), wherein a separate electric drive, in particular an electric motor (16), is each assignable to the reed holder (1) and the planer carriage (6).

10. A retrofit kit according to claim 9, **characterized in that** the control device (18) comprises a speed control for the electric drives, said speed control preferably comprising a speed measuring device.

11. A retrofit kit according to claim 9 or 10, **characterized in that** the control device (18) comprises a program memory including a memory area for a pregiven motor speed of the drive of the reed holder (1), a memory area for a pregiven motor speed of the drive for the planer carriage (6) and a memory area for a pregiven operating time.

12. A retrofit kit according to claim 9, 10 or 11, **characterized in that** the control device (18) comprises a counting unit for determining the operating time, wherein a limit value memory is preferably assigned to the counting unit and the counting unit, when exceeding a limit value, cooperates with a signalling device to generate a planer or scraper tool exchange signal.

13. A retrofit kit according to any one of claims 9 to 12, **characterized in that** a pressure vessel (24) or a pressure generating device for a gaseous medium is provided, which is connectable to an outlet nozzle (28) capable of being disposed in the region of the reed holder (1), wherein a switch connectable to the control device (18) or a switch valve (26) for controlling the ejection of the gaseous medium is provided.

## Revendications

1. Dispositif de fabrication d'anches pour des becs d'instruments à vent de la famille des bois comprenant un support d'anche (1) pour l'anche (2) à usiner, qui est logé de manière pivotante autour d'un axe de pivotement (3), un chariot de rabotage (6) entraînable au moyen d'un entraînement pour un mouvement alternatif avec un outil de rabotage ou de raclage (5) pour l'usinage de l'anche (2) et un appareil de balayage (12) relié au chariot de rabotage (6) pour le balayage d'un gabarit (13), dans lequel l'entraînement du chariot de rabotage est réalisé de telle manière qu'il lève le chariot de rabotage (6) pour le mouvement de retour, **caractérisé en ce que** le mouvement pivotant du support d'anche (1) et le mouvement alternatif du chariot de rabotage (6) sont entraînés électriquement, et
**en ce que** des moyens sont prévus pour synchroniser mécaniquement ou électriquement entre eux le mouvement pivotant du support d'anche (1) et le mouvement alternatif du chariot de rabotage (6) de sorte que l'anche (2) est usinée le long de plusieurs bandes parallèles, dans lequel dans le cas de la synchronisation électrique, respectivement un propre entraînement électrique, en particulier un moteur électrique (14) est associé au support d'anche (1) et au chariot de rabotage (6), dans lequel les deux entraînements électriques sont reliés à un dispositif de commande commun (18).

2. Dispositif selon la revendication 1, **caractérisé en ce que** le dispositif de commande (18) présente une régulation de vitesse de rotation pour les entraînements électriques, dans lequel la régulation de vitesse de rotation comprend de préférence un dispositif de mesure de vitesse de rotation.

3. Dispositif selon la revendication 1 ou 2, **caractérisé en ce que** le dispositif de commande (18) comprend une mémoire de programme, avec une zone de mémoire pour une vitesse de rotation de moteur prescrite de l'entraînement du support d'anche (1), une zone de mémoire pour une vitesse de rotation de moteur prescrite de l'entraînement pour le chariot de rabotage (6) et éventuellement une zone de mémoire pour un temps de fonctionnement prescrit.

4. Dispositif selon la revendication 1, 2 ou 3, **caractérisé en ce que** le dispositif de commande (18) comprend une unité de comptage pour la détection du temps de fonctionnement, dans lequel de préférence une mémoire de valeur limite est attribuée à l'unité de comptage, et l'unité de comptage interagit en cas de dépassement d'une valeur limite avec un dispositif de signalisation afin de générer un signal de changement d'outil de rabotage ou de raclage.

5. Dispositif selon l'une des revendications 1 à 4, **caractérisé en ce que** l'entraînement du chariot de rabotage (6) comprend un entraînement excentrique (8) pour la conversion du mouvement rotatoire du moteur électrique (14) en un mouvement alternatif du chariot de rabotage (6).

6. Dispositif selon l'une des revendications 1 à 5, **caractérisé en ce que** le mouvement pivotant du support d'anche (1) est limité par des butées mécaniques et des moyens sont prévus pour la détection d'une position de fin de course du mouvement pivotant, lesquels interagissent avec le dispositif de commande (18) pour l'inversion de sens de rotation de l'entraînement électrique.

7. Dispositif selon la revendication 6, **caractérisé en ce que** les moyens de détection comprennent un dispositif de mesure pour la détection de la consommation de courant de l'entraînement électrique.

8. Dispositif selon l'une des revendications 1 à 7, **caractérisé en ce qu'**un récipient à pression (24) ou un dispositif de génération de pression pour un fluide gazeux est prévu, l'un ou l'autre étant raccordé à une buse d'échappement (28) agencée dans la zone du support d'anche (1), dans lequel un commutateur relié au dispositif de commande (18) ou une soupape de commutation (26) est prévu(e) pour la commande de l'émission du fluide gazeux.

9. Kit d'adaptation pour un dispositif selon le préambule de la revendication 1, comprenant un entraînement électrique pour le mouvement pivotant du support d'anche (1), un entraînement électrique pour le mouvement alternatif du chariot de rabotage (6) et des moyens qui sont prévus pour synchroniser mécaniquement ou électriquement entre eux le mouvement pivotant du support d'anche (1) et le mouvement alternatif du chariot de rabotage (6), de sorte que l'anche (2) est usinée le long de plusieurs bandes parallèles, dans lequel le kit d'adaptation comprend de plus en cas de synchronisation électrique un dispositif de commande (18), en particulier un microcontrôleur, l'un ou l'autre pouvant être relié aux entraînements électriques, en particulier aux moteurs électriques (16), dans lequel respectivement un propre entraînement électrique, en particulier un moteur électrique (16), peut être attribué au support d'anche (1) et au chariot de rabotage (6).

10. Kit d'adaptation selon la revendication 9, **caractérisé en ce que** le dispositif de commande (18) présente une régulation de vitesse de rotation pour les entraînements électriques, la régulation de vitesse de rotation comprenant de préférence un dispositif de mesure de vitesse de rotation.

11. Kit d'adaptation selon la revendication 9 ou 10, **caractérisé en ce que** le dispositif de commande (18) comprend une mémoire de programme, avec une zone de mémoire pour une vitesse de rotation de moteur prescrite de l'entraînement du support d'anche (1), une zone de mémoire pour une vitesse de rotation de moteur prescrite de l'entraînement pour le chariot de rabotage (6) et une zone de mémoire pour un temps de fonctionnement prescrit.

12. Kit d'adaptation selon la revendication 9, 10 ou 11, **caractérisé en ce que** le dispositif de commande (18) comprend une unité de comptage pour la détection du temps de fonctionnement, dans lequel de préférence une mémoire de valeur limite est attribuée à l'unité de comptage, et l'unité de comptage interagit en cas de dépassement d'une valeur limite avec un appareil de signalisation afin de générer un signal de changement d'outil de rabotage ou de raclage.

13. Kit d'adaptation selon l'une des revendications 9 à 12, **caractérisé en ce qu'**un récipient à pression (24) ou un dispositif de génération de pression pour un fluide gazeux est prévu, 'un ou l'autre pouvant être relié à une buse d'échappement (28) pouvant être agencée dans la zone du support d'anche (1), dans lequel un commutateur pouvant être relié au dispositif de commande (18) ou une soupape de commutation (26) est prévu(e) pour la commande de l'émission du fluide gazeux.
